# FASCICULE DE BREVET EUROPEEN

(11) **EP 2 794 099 B1**
(45) Date de publication et mention de la délivrance du brevet: **08.05.2019**
(21) Numéro de dépôt: 12813900.3
(22) Date de dépôt: 27.11.2012
(51) Int. Cl.: B01J 29/076, B01J 29/16, B01J 29/78, B01J 35/00, B01J 37/00, B01J 37/02, B01J 37/28, B01J 37/26, C10G 47/20, B01J 27/14, B01J 31/00, B01J 37/20

(54) **CATALYSEUR UTILISABLE EN HYDROCONVERSION COMPRENANT AU MOINS UNE ZÉOLITHE ET DES METAUX DES GROUPES VIII ET VIB ET PREPARATION DU CATALYSEUR**
KATALYSATOR ZUR HYDROCONVERSION ENTHALTEND MINDESTENS EINEN ZEOLITH, VIII UND VIB METALLE UND DESSEN HERSTELLUNG
HYDROCONVERSION CATALYST COMPRISING AT LEAST A ZEOLITE, VIII AND VIB GROUP METALS, AND PREPARATION THEREOF

(30) Priorité: 22.12.2011 FR 1104025
(43) Date de publication de la demande: 29.10.2014
(73) Titulaire: IFP Energies nouvelles, 92500 Rueil-Malmaison (FR); Total Raffinage France, 92400 Courbevoie (FR)
(72) Inventeur: SIMON, Laurent, F-69100 Villeurbanne (FR); GUICHARD, Bertrand, F-38140 Izeaux (FR); LAPISARDI, Grégory, F-69008 Lyon (FR); DULOT, Hughes, 92500 Reuil Malmaison (FR); DE GRANDI, Valentina, 76600 Le Havre (FR); MINOUX, Delphine, B-1400 Nivelles (BE); DATH, Jean-Pierre, B-7970 Beloeil (BE)
(74) Mandataire: IFP Energies nouvelles
(86) Numéro de dépôt international: PCT/FR2012/000488
(87) Numéro de publication internationale: WO 2013/093229

(56) Documents cités:
- EP-A1- 1 577 007
- EP-A1- 1 900 430
- EP-A1- 2 072 127
- WO-A1-2006/077326
- WO-A1-2010/020714
- WO-A1-2011/080407

## Description

L'invention concerne un catalyseur comprenant une zéolite, son procédé de préparation et un procédé d'hydrocraquage utilisant ce catalyseur.

### ART ANTÉRIEUR

L'hydrocraquage de coupes pétrolières lourdes est un procédé très important du raffinage qui permet de produire, à partir de charges lourdes excédentaires et peu valorisables, des fractions plus légères telles que les essences, carburéacteurs et carburant diesel que recherche le raffineur pour adapter sa production à la structure de la demande. C'est un procédé largement décrit dans la littérature.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports acides dont les surfaces varient généralement de 150 à 800 m²/g⁻¹ telles que les alumines halogénées (chlorées ou fluorées notamment), les combinaisons d'oxydes de bore et d'aluminium, et plus souvent les silice-alumine amorphes et les zéolithes en combinaison avec un liant généralement aluminique. La fonction hydrogénante est apportée soit par un ou plusieurs métaux du groupe VIB de la classification périodique des éléments, soit par une association d'au moins un métal du groupe VIB de la classification périodique et au moins un métal du groupe VIII déposés sur le support.

La bifonctionnalité du catalyseur, c'est-à-dire le rapport, la force et la distance entre les fonctions acides et hydrogénantes est un paramètre clé connu de l'homme de l'art pour influencer l'activité et la sélectivité du catalyseur. Une fonction acide faible et une fonction hydrogénante forte donnent des catalyseurs peu actifs, travaillant à température en général élevée (supérieure ou égale à 390-400°C), et à vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens (carburéacteurs et gazoles). Inversement, une fonction acide forte et une fonction hydrogénante faible donnent des catalyseurs actifs, mais présentant de moins bonnes sélectivités en distillats moyens.

Les catalyseurs comportant des zéolithes présentent une bonne activité catalytique , mais présentent des sélectivités en distillats moyens (carburéacteurs et gazoles) souvent insuffisantes.

L'art antérieur fait état de nombreux travaux afin d'améliorer la sélectivité en distillats moyens des catalyseurs zéolithiques. Ces derniers sont composés d'une phase hydrogénante de composition très variable (différents métaux), généralement déposé sur un support contenant une zéolithe, le plus souvent la zéolithe Y. La phase hydrogénante est active sous forme sulfure.

Par exemple, on peut citer les travaux relatifs à la désalumination par steaming ou attaque acide de la zéolithe Y la modification de la zéolithe Y , l'utilisation de catalyseurs composites , ou l'utilisation de petits cristaux de zéolithes Y. D'autres brevets comme le WO2007126419 revendiquent l'utilisation de mélange de zéolithes telles que Beta et USY pour l'amélioration des performances des catalyseurs d'hydrocraquage.

Peu de travaux sur l'hydrocraquage sont consacrés à l'étude de la nature et de la modification de la phase métallique au sein du catalyseur. On peut citer le brevet US5232578 qui décrit un procédé d'hydrocraquage en plusieurs lits catalytiques avec des catalyseurs ayant des teneurs en métaux différents, la demande de brevet FR11/00.043 qui revendique l'utilisation de deux phases métalliques distinctes ou le brevet US6524470 qui décrit l'ajout de promoteur.

Pour les réactions d'hydrotraitement, l'ajout d'un composé organique sur les catalyseurs monofonctionnels d'hydrotraitement pour améliorer leur activité en HDS, HDA ou HDA est maintenant bien connu de l'homme du métier. De nombreux brevets protègent l'utilisation de différentes gammes de composés organiques, tels que les mono,-di-ou polyalcools.

Le brevet WO11080407 propose un procédé de préparation et l'utilisation dans les procédés d'hydrotraitement d'un catalyseur comprenant des métaux des groupes VIB et VIII, un support amorphe à base d' alumine, du phosphore, un succinate de dialkyle C1-C4 et une fonction hydro-déshydrogénante, catalyseur dont le spectre Raman comprend les bandes les plus intenses caractéristiques des hétéropolyanions de Keggin (974 et/ou 990 cm⁻¹), du succinate de dialkyle C1-C4 et de l'acide acétique (896 cm⁻¹).

La présente demande propose un moyen pour améliorer la sélectivité en distillats moyens des catalyseurs zéolithiques tout en conservant ou en améliorant l'activité catalytique.

### DESCRIPTION DE L'INVENTION

La présente invention concerne un catalyseur contenant un support comprenant au moins un liant et au moins une zéolite ayant au moins une série de canaux dont l'ouverture est définie par un anneau contenant 12 atomes d'oxygène, ledit catalyseur comprenant du phosphore, au moins un succinate de dialkyle C1-C4, de l'acide acétique et une fonction hydro-déshydrogénante comprenant au moins un élément du groupe VIB et au moins un élément du groupe VIII, catalyseur dont le spectre Raman comprend les bandes à 990 et/ou 974 cm⁻¹ caractéristiques d'au moins un hétéropolyanion de Keggin, les bandes caractéristiques dudit succinate et la bande principale à 896 cm⁻¹ caractéristique de l'acide acétique.

L'invention concerne également son procédé de préparation qui sera décrit plus loin. Ce, catalyseur est utilisable pour l'hydroconversion (hydrocraquage) de charges hydrocarbonées.

Il permet d'obtenir une amélioration des performances catalytiques (notamment la sélectivité en distillats moyens à iso-conversion) par rapport aux catalyseurs de l'art antérieur. En effet, il a été mis en évidence que l'utilisation du couple succinate de dialkyle C1-C4, et en particulier de diméthyle, et acide acétique sur un précurseur catalytique séché comprenant une ou un mélange de plusieurs zéolithes et des métaux des groupes VIB et VIII conduit de façon surprenante à une sélectivité en distillats moyens à iso-conversion nettement améliorée par rapport à celle obtenue sur les catalyseurs conventionnels correspondant. La mise en oeuvre de l'invention permet d'obtenir un gain en activité mais pas au détriment de la sélectivité en distillats moyens.

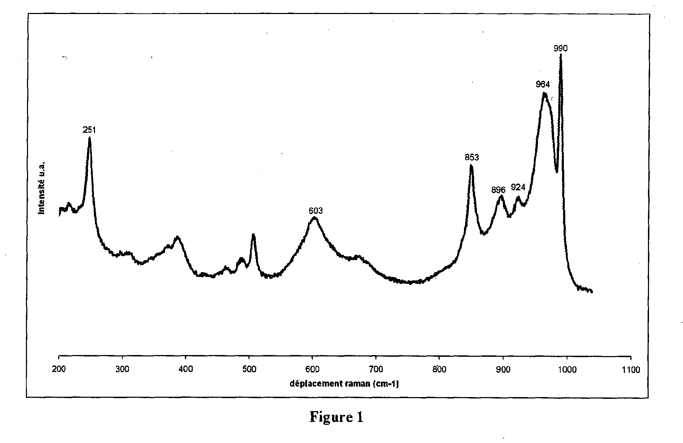

Le catalyseur obtenu possède un spectre Raman caractéristique regroupant :
1) des bandes caractéristiques du ou des hétéropolyanions de type Keggin PXY₁₁O₄₀^{x-} et/ou PY₁₂O₄₀^{x-} où Y est un métal du groupe VIB et X un métal du groupe VIII. D'après Griboval, Blanchard, Payen, Fournier, Dubois dans Catalysis Today 45 (1998) 277 fig. 3 e), les bandes principales de la structure PCoMo₁₁O₄₀^{x-} sont sur catalyseur séché à 232, 366, 943, 974 cm⁻¹ La bande la plus intense caractéristique de ce type d'HPA de Keggin lacunaire se situe à 974 cm⁻¹. D'après Griboval, Blanchard, Gengembre, Payen, Fournier, Dubois, Bernard, Journal of Catalysis 188 (1999) 102, fig. 1 a), les bandes principales de PMo₁₂O₄₀^{x-} sont à l'état massique de l'HPA, par exemple avec du cobalt en contre ion à 251, 603, 902, 970, 990 cm⁻¹. La bande la plus intense caractéristique de cet HPA de Keggin se situe à 990 cm⁻¹. M. T. Pope "Heteropoly and Isopoly oxometalates", Springer Verlag, p 8, nous enseigne également que ces bandes ne sont pas caractéristiques de la nature de l'atome X ou Y, mais bien de la structure de l'HPA de Keggin, complet, lacunaire ou substitué.
2) des bandes caractéristiques du (des) succinate(s) de dialkyle utilisé(s). Le spectre Raman du succinate de diméthyle constitue une empreinte univoque de cette molécule. Dans la zone spectrale 300-1800 cm⁻¹, ce spectre se caractérise par la série de bandes suivantes (seules les bandes les plus intenses sont reportées, en cm⁻¹) : 391, 853 (bande la plus intense), 924, 964, 1739 cm⁻¹. Le spectre du succinate de diéthyle comporte dans la zone spectrale considérée les bandes principales suivantes : 861 (bande la plus intense), 1101, 1117 cm⁻¹. De même pour le succinate de dibutyle : 843, 1123, 1303, 1439, 1463 cm⁻¹ et le succinate de diisopropyle : 833, 876, 1149, 1185, 1469 (bande la plus intense), 1733 cm⁻¹.
3) des bandes caractéristiques de l'acide acétique dont les principales: 448, 623, 896 cm⁻¹. La bande la plus intense est à 896 cm⁻¹.

La position exacte des bandes, leurs formes et leur intensités relatives peuvent varier dans une certaine mesure en fonction des conditions d'enregistrement du spectre, tout en restant caractéristiques de cette molécule. Les spectres Raman des composés organiques sont par ailleurs bien documentés soit dans les bases de données de spectre Raman (voir par exemple, Spectral Database for Organic Compounds, http://riodb01.ibase.aist.go.jp/sdbs/cgi-bin/direct_frame_top.cgi) soit par les fournisseurs du produit (voir par exemple, www.sigmaaldrich.com).

Les spectres Raman ont été obtenus avec un spectromètre de type Raman dispersif équipé d'un laser argon ionisé (514 nm). Le faisceau laser est focalisé sur l'échantillon à l'aide d'un microscope équipé d'un objectif ×50 longue distance de travail. La puissance du laser au niveau de l'échantillon est de l'ordre de 1 mW. Le signal Raman émis par l'échantillon est collecté par le même objectif et est dispersé à l'aide d'un réseau 1800 tr/mn puis collecté par un détecteur CCD. La résolution spectrale obtenue est de l'ordre de 0,5 cm⁻¹. La zone spectrale enregistrée est comprise entre 300 et 1800 cm⁻¹. La durée d'acquisition a été fixée à 120 s pour chaque spectre Raman enregistré.

De préférence, le succinate de dialkyle utilisé est le succinate de diméthyle, et le catalyseur possède dans son spectre les bandes Raman principales à 990 et/ou 974 cm⁻¹ caractéristique(s) du (des) hétéropolyanion(s) de Keggin, et 853 cm⁻¹ caractéristique du succinate de diméthyle et 896 cm⁻¹ caractéristique de l'acide acétique.

De préférence, le catalyseur de l'invention comprend un support formé d'une ou d'un mélange de zéolithes (telles que définies dans l'invention; de préférence les zéolites de type Y et/ou bêta) et au moins un liant qui est de préférence l'alumine et/ou la silice-alumine. De préférence, le support est constitué d'alumine et de zéolite. ou silice-alumine et de zéolite.

Le catalyseur selon l'invention peut comprendre également du bore et/ou du fluor et/ou du silicium.

Il est également ici décrit un procédé de préparation du catalyseur selon l'invention, qui comporte au moins une étape d'imprégnation d'un précurseur catalytique séché à une température inférieure à 180°C contenant éventuellement du phosphore et une fonction hydro-déshydrogénante, ainsi qu'un support à base d'au moins une zéolithe mise en forme dans un liant, par une solution d'imprégnation comprenant la combinaison acide acétique et succinate de dialkyle C1-C4 et le composé de phosphore, si celui-ci n'a pas été introduit en totalité préalablement, suivie d'une étape de maturation dudit précurseur catalytique imprégné, puis une étape de séchage à une température inférieure à 180°C, sans étape de calcination ultérieure ; le catalyseur obtenu est de préférence soumis à une étape de sulfuration.

### DESCRIPTION DÉTAILLÉE

La préparation d'un catalyseur selon l'invention comprend les étapes successives suivantes qui vont être détaillées par la suite :
a) au moins une étape d'imprégnation d'un support, comprenant au moins un liant et au moins une zéolite ayant au moins une série de canaux dont l'ouverture est définie par un anneau contenant 12 atomes d'oxygène, par au moins une solution contenant les éléments de la fonction hydro-déshydrogénante, et du phosphore; on appellera le produit obtenu "précurseur catalytique" ,
b) séchage à une température inférieure à 180°C sans calcination ultérieure;on appellera le produit obtenu "précurseur catalytique séché",
c) au moins une étape d'imprégnation par une solution d'imprégnation comprenant au moins un succinate de dialkyle C1-C4, l'acide acétique et au moins un composé de phosphore, si celui-ci n'a pas été introduit en totalité à l'étape a); on appellera le produit obtenu"précurseur catalytique séché imprégné"
d) une étape de maturation,
e) une étape de séchage à une température inférieure à 180°C, sans étape de calcination ultérieure; on appellera le produit obtenu "catalyseur".

De préférence, le produit obtenu à l'issue de l'étape e) subit une étape f) de sulfuration.

Ainsi que cela sera décrit ultérieurement, la préparation du catalyseur selon l'invention est réalisée de préférence avec les modes suivants pris seuls ou en combinaison : le support est à base d'au moins une zéolithe mise en forme dans au moins un liant; la totalité de la fonction hydrogénante étant introduite lors de l'étape a) ; le succinate de dialkyle est le succinate de diméthyle ; l'étape c) est réalisée en l'absence de solvant ; l'étape d) est réalisée à une température de 17 à 50°C et l'étape e) est réalisée à une température comprise entre 80 et 160°C.

De façon très préférée, la préparation du catalyseur selon l'invention comprend les étapes successives suivantes :
a) au moins une étape d'imprégnation à sec dudit support , à base d'au moins une zéolithe mise en forme dans un liant, par une solution contenant la totalité des éléments de la fonction hydro-déshydrogénante, et le phosphore,
b) séchage à une température comprise entre 75 et 130°C sans calcination ultérieure,
c) au moins une étape d'imprégnation à sec par une solution d'imprégnation comprenant le succinate de diméthyle et l'acide acétique,
d) une étape de maturation à 17-50°C,
e) une étape de séchage à une température comprise entre 80 et 160°C, sans étape de calcination ultérieure.

Le précurseur catalytique contenant la fonction hydro-déshydrogénante et le support à base d'au moins une zéolithe mise en forme dans au moins un liant ainsi que son mode de préparation sont décrits ci dessous.

Ledit précurseur catalytique obtenu à l'issue de l'étape a) du procédé selon l'invention peut être préparé pour une grande part par toutes les méthodes bien connues de l'homme du métier.

Ledit précurseur catalytique contient une fonction hydro-déshydrogénante et contient éventuellement du phosphore et/ou du bore et/ou du fluor en tant que dopant ainsi que le support à base d'au moins une zéolithe mise en forme dans un liant. La fonction hydro-deshydrogénante comprend au moins un élément du groupe VIB et au moins un élément du groupe VIII.

Ledit précurseur catalytique contient un support à base d'au moins une zéolithe mise en forme en utilisant avantageusement un liant poreux, de préférence amorphe, constitué d'au moins un oxyde réfractaire. Ledit liant est avantageusement choisi dans le groupe formé par l'alumine, la silice, les argiles, l'oxyde de titane, l'oxyde de bore et la zircone, pris seul ou en mélange. Le liant peut être constitué par un mélange d'au moins deux des oxydes cités ci dessus, et de préférence la silice-alumine. On peut choisir également les aluminates. On préfère utiliser des liants contenant de l'alumine, sous toutes ces formes connues de l'homme du métier, par exemple l'alumine gamma. Les liants préférés sont l'alumine et la silice-alumine.

Ledit précurseur catalytique contient un support à base d'au moins une zéolithe qui comprend au moins une série de canaux dont l'ouverture est définie par un anneau contenant 12 atomes d'oxygène (12MR). Ladite zéolithe est avantageusement choisie parmi les zéolithes définies dans la classification "Atlas of Zeolite Framework Types, 6th revised édition", Ch. Baerlocher, L. B. Mc Cusker, D.H. Oison, 6ème Edition, Elsevier, 2007, Elsevier" présentant au moins une série de canaux dont l'ouverture de pores est définie par un anneau contenant 12 atomes d'oxygène. La zéolithe initialement utilisée, avant d'être modifiée, contient avantageusement, en plus d'au moins une série de canaux dont l'ouverture de pores est définie par un anneau contenant 12 atomes d'oxygène (12MR), au moins une série de canaux dont l'ouverture de pores est définie par un anneau contenant 8 atomes d'oxygène (8 MR) et / ou au moins une série de canaux dont l'ouverture de pores est définie par un anneau contenant 10 atomes d'oxygène (10 MR).

La zéolithe contenu dans le support dudit précurseur catalytique peut avantageusement contenir au moins un autre élément T, différent du silicium et de l'aluminium, s'intégrant sous forme tétraédrique dans la charpente de la zéolithe. De préférence, ledit élément T est choisi parmi le fer, le germanium, le bore et le titane et représente une portion pondérale comprise entre 2 et 30% de l'ensemble des atomes constitutifs de la charpente zéolithique autre que les atomes d'oxygène. La zéolithe présente alors un rapport atomique (Si+T)/Al compris entre 2 et 200, de préférence compris entre 3 et 100 et de manière très préférée compris entre 4 et 80, T étant défini comme précédemment.

De préférence, la zéolithe initialement utilisée est choisie parmi le groupe FAU, BEA, ISV, IWR, IWW, MEI, UWY et de manière très préférée, la zéolithe initiale est prise dans le groupe FAU et BEA. De préférence c'est une zéolite de type FAU et/ou BEA, telle que la zéolite Y et/ou bêta.

La zéolithe utilisée selon l'invention peut avoir subit des traitements afin de la stabiliser ou de créer de la mésoporosité. Ces modifications sont réalisées par l'une au moins des techniques de désalumination connues de l'homme du métier, et par exemple le traitement hydrothermique ou l'attaque acide. De préférence, cette modification est réalisée par combinaison de trois types d'opérations connues de l'homme du métier : le traitement hydrothermique, l'échange ionique et l'attaque acide. La dite zéolithe peut également subir des traitements dit de désilication. par des solutions basiques, et on pourra citer plus spécifiquement sans se restreindre des traitements par NaOH ou Na₂CO₃ combinés ou pas avec un traitement de désalumination.

La zéolithe modifiée ou non utilisée dans le support peut être, sans que cela soit limitatif, par exemple sous forme de poudre, poudre broyée, suspension, suspension ayant subi un traitement de désagglomération. Ainsi, par exemple, la zéolithe peut avantageusement être mise en suspension acidulée ou non à une concentration ajustée à la teneur finale en zéolithe visée sur le support. Cette suspension appelée couramment une barbotine est alors avantageusement mélangée avec les précurseurs de la matrice.

Selon un mode de préparation préféré, la zéolithe peut avantageusement être introduite lors de la mise en forme du support avec les éléments qui constituent la matrice. Par exemple, selon ce mode préféré de la présente invention, la zéolithe selon l'invention est ajoutée à un gel humide d'alumine au cours de l'étape de mise en forme du support.

Selon un autre mode de préparation préféré, la zéolithe peut être introduite au cours de la synthèse de la matrice. Par exemple, selon ce mode préféré de la présente invention, la zéolithe est ajoutée au cours de la synthèse de la matrice silico-aluminique ; la zéolithe peut être ajoutée à un mélange composé d'un composé d'alumine en milieu acide avec un composé de silice totalement soluble.

Le support peut être mis en forme par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier.

Les catalyseurs utilisés dans le procédé selon l'invention ont avantageusement la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme trilobe est utilisée de manière préférée, mais toute autre forme peut être utilisée. Les catalyseurs selon l'invention peuvent éventuellement être fabriqués et employés sous la forme de poudre concassée, de tablettes, d'anneaux, de billes, de roues.

La fonction hydro-deshydrogénante dudit précurseur catalytique est assurée par au moins un élément du groupe VIB et par au moins un élément du groupe VIII. La teneur totale en éléments hydro-déshydrogénants est avantageusement supérieure à 6 % poids oxyde par rapport au poids total du catalyseur. Les éléments du groupe VIB préférés sont le molybdène et le tungstène. Les éléments du groupe VIII préférés sont des éléments non nobles et en particulier le cobalt et le nickel.

Avantageusement, la fonction hydrogénante est choisie dans le groupe formé par les combinaisons des éléments nickel-molybdène, ou nickel-cobalt-molybdène, ou nickel-molybdène-tungstène.

Les précurseurs de molybdène qui peuvent être utilisés sont également bien connus de l'homme du métier. On se reportera à la demande de brevet WO-2011/080407 qui décrit ces précurseurs ainsi que ceux du tungstène, et plus généralement ceux des éléments des groupes VIII et VIB.

Les quantités des précurseurs des éléments du groupe VIB sont avantageusement comprises entre 5 et 40 % poids d'oxydes par rapport à la masse totale du précurseur catalytique, de préférence entre 8 et 37 % poids et de manière très préférée entre 10 et 35 % poids.

La quantité des précurseurs des éléments du groupe VIII est avantageusement comprise entre 1 et 10 % poids d'oxydes par rapport à la masse totale du précurseur catalytique, de préférence entre 1,5 et 9 % poids et de manière très préférée, entre 2 et 8 % poids.

La fonction hydro-deshydrogénante dudit précurseur catalytique peut avantageusement être introduite dans le catalyseur à divers niveaux de la préparation et de diverses manières. Ladite fonction hydro-deshydrogénante peut avantageusement être introduite en partie lors de la mise en forme dudit support amorphe ou de préférence après cette mise en forme. Avantageusement, la totalité de la fonction hydro-déshydrogénante est introduite lors de l'étape a).

Dans le cas où la fonction hydro-deshydrogénante est introduite en partie lors de la mise en forme dudit support amorphe, elle peut être introduite en partie (par exemple au plus 10% d'élément(s) du groupe VIB est introduit par malaxage) seulement au moment du malaxage avec un gel d'alumine choisi comme matrice, le reste de l'(des) élément(s) hydrogénant(s) étant alors introduit ultérieurement. De manière préférée, lorsque la fonction hydro-deshydrogénante est introduite pour partie au moment du malaxage, la proportion d'élément du groupe VIB introduite au cours de cette étape est inférieure à 5 % de la quantité totale d'élément du groupe VIB introduite sur le catalyseur final. De manière préférée, l'élément du groupe VIB est introduit en même temps que l'élément du groupe VIII, quel que soit le mode d'introduction.

Dans le cas où la fonction hydro-déshydrogénante est introduite au moins en partie et de préférence en totalité, après la mise en forme dudit support amorphe, l'introduction de ladite fonction hydro-deshydrogénante sur le support amorphe peut être avantageusement effectuée par une ou plusieurs imprégnations en excès de solution sur le support mis en forme et calciné, ou de préférence par une ou plusieurs imprégnations à sec et, de manière préférée, par une imprégnation à sec dudit support mis en forme et calciné, à l'aide de solutions contenant les sels précurseurs des métaux. De manière très préférée, la fonction hydro-déshydrogénante est introduite en totalité après la mise en forme dudit support amorphe, par une imprégnation à sec dudit support à l'aide d'une solution d'imprégnation contenant les sels précurseurs des métaux. L'introduction de ladite fonction hydro-deshydrogénante peut également être avantageusement effectuée par une ou plusieurs imprégnations du support mis en forme et calciné, par une solution du (ou des) précurseur(s) de la phase active. Dans le cas où les éléments sont introduits en plusieurs imprégnations des sels précurseurs correspondants, une étape de séchage intermédiaire du catalyseur est en général effectuée, à une température comprise entre 50 et 180°C, de manière préférée entre 60 et 150°C et de manière très préférée entre 75 et 130°C.

Du phosphore est également introduit dans le catalyseur. Un autre dopant du catalyseur peut également être introduit qui est choisi parmi le bore, le fluor pris seul ou en mélange. Le dopant est un élément ajouté, qui en lui-même ne présente aucun caractère catalytique mais qui accroît l'activité catalytique du (des) métal (métaux). Ledit dopant peut être avantageusement introduit seul ou en mélange avec l'un au moins des éléments de la fonction hydro-déshydrogénante. Il peut également être introduit dès la synthèse du support. Il peut également être introduit juste avant ou juste après la peptisation de la matrice choisie, telle que par exemple et de préférence l'oxyhydroxyde d'aluminium (boehmite) précurseur de l'alumine. Ledit dopant peut également être avantageusement introduit en mélange avec le(s) précurseur(s) de la fonction hydro-déshydrogénante, en totalité ou en partie sur le support amorphe mis en forme, de préférence l'alumine ou la silice-alumine sous forme extrudée, par une imprégnation à sec dudit support amorphe à l'aide d'une solution contenant les sels précurseurs des métaux et le(s) précurseur(s) du (des) dopant(s). Enfin, le dopant, en particulier lorsque celui-ci est le phosphore, peut-être introduit avec le succinate de dialkyle.

Les sources de bore et de fluor sont également décrites dans la demande WO-2011/30807

La source de phosphore préférée est l'acide orthophosphorique H₃PO₄, mais ses sels et esters comme phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Le dopant est avantageusement introduit dans le précurseur catalytique dans une quantité d'oxyde dudit dopant par rapport au catalyseur :
- comprise entre 0 et 40 %, de préférence de entre 0 et 30 % et de manière encore plus préférée entre 0 et 20 % ,de préférence entre 0 et 15 % et de manière encore plus préférée entre 0 et 10 % lorsque ledit dopant est le bore; lorsque le bore est présent, de préférence la quantité minimum est de 0.1% poids,
- comprise entre 0,1 à 20 %, de préférence entre 0,1 et 15 % et de manière encore plus préférée entre 0,1 et 10 % poids, lorsque ledit dopant est le phosphore,
- comprise entre 0 et 20 %, de préférence entre 0 et 15 % et de manière encore plus préférée entre 0 et 10 %, lorsque ledit dopant est le fluor ; lorsque le fluor est présent, de préférence la quantité minimum est de 0.1% poids.

Le phosphore est toujours présent. Il est introduit au moins par imprégnation sur le précurseur catalytique lors de l'étape a) et/ou sur le précurseur catalytique séché lors de l'étape c). De façon préférée, il en est de même pour les autres dopants. Néanmoins, comme cela a été dit précédemment, les dopants peuvent être introduits en partie lors de la préparation du support (mise en forme comprise) ou en totalité (à l'exception du phosphore).

L'introduction de ladite fonction hydro-deshydrogénante et éventuellement d'un dopant dans ou sur le support calciné mis en forme est ensuite avantageusement suivie d'une étape b) de séchage au cours de laquelle le solvant des sels métalliques précurseurs du (ou des) oxydes de métal(aux) (solvant qui est généralement de l'eau) est éliminé, à une température comprise entre 50 et 180°C, de manière préférée entre 60 et 150°C ou encore entre 65 et 150°C et de manière très préférée entre 70 et 140°C ou encore entre 75 et 130°C. L'étape de séchage du "précurseur catalytique séché" ainsi obtenu n'est jamais suivie d'une étape de calcination sous air, par exemple à une température supérieure à 200°C.

De préférence, dans l'étape a) du procédé selon l'invention, ledit "précurseur catalytique" est obtenu par imprégnation à sec d'une solution comprenant un (ou des) précurseur(s) de la fonction hydro-déshydrogénante, et du phosphore sur un support calciné à base d'au moins une zéolithe mise en forme dans un liant mis en forme, suivie d'un séchage à une température inférieure à 180°C, de préférence comprise entre 50 et 180 °C, de manière préférée entre 60 et 150°C et de manière très préférée entre 75 et 130°C.

Il est ainsi obtenu est un "précurseur catalytique séché" à l'issue de l'étape b).

Il est possible dans l'étape a) du procédé selon l'invention de préparer une solution d'imprégnation contenant au moins un dopant choisi parmi le bore, le fluor, pris seul ou en mélange

De manière encore plus préférée, le "précurseur catalytique" dans l'étape a) du procédé selon l'invention est préparé avec une solution d'imprégnation contenant au moins un précurseur de chaque élément de la fonction hydro-déshydrogénante, en présence d'un précurseur de phosphore, le support à base d'au moins une zéolithe mise en forme dans un liant constitué d'alumine ou de silice alumine.

Conformément à l'étape c) du procédé selon l'invention, ledit précurseur catalytique séché est imprégné par une solution d'imprégnation comprenant au moins un succinate de dialkyle C1-C4 (et en particulier du succinate de diméthyle) et de l'acide acétique.

Lesdits composés sont avantageusement introduits dans la solution d'imprégnation de l'étape c) du procédé selon l'invention dans une quantité correspondant :
1) à un rapport molaire de succinate de dialkyle (par ex diméthyle) par élément(s) du groupe GVIB imprégné du précurseur catalytique compris entre 0,15 à 2,5 mole/mole, de préférence compris entre 0,3 à 2,0 mole/mole, de manière préférée compris entre 0,5 et 1,8 mole/mole et de manière très préférée, compris entre 0,8 et 1,6 mole/mole, et
2) à un rapport molaire d'acide acétique par élément(s) du groupe GVIB imprégné du précurseur catalytique compris entre 0,1 à 10 mole/mole, de préférence compris entre 0,5 à 8 mole/mole, de manière préférée compris entre 1,3 et 7,5 mole/mole et de manière très préférée, compris entre 1,5 et 7 mole/mole.

Conformément à l'étape c) du procédé selon l'invention, la combinaison succinate de dialkyle et acide acétique est introduite sur le précurseur catalytique séché par au moins une étape d'imprégnation et de préférence par une seule étape d'imprégnation d'une solution d'imprégnation sur ledit précurseur catalytique séché.

Ladite combinaison peut avantageusement être déposée en une ou plusieurs étapes soit par imprégnation en slurry, soit par imprégnation en excès, soit par imprégnation à sec, soit par tout autre moyen connus de l'homme du métier.

Selon un mode de réalisation préféré de l'étape c) du procédé de préparation selon l'invention, l'étape c) est une seule étape d'imprégnation à sec.

Conformément à l'étape c) du procédé selon l'invention, la solution d'imprégnation de l'étape c) comprend au moins la combinaison du succinate de dialkyle C1-C4 (en particulier du diméthyle) et de l'acide acétique.

La solution d'imprégnation utilisée à l'étape c) du procédé selon l'invention peut être complétée par tout solvant non protique connu de l'homme du métier comprenant notamment le toluène, le xylène.

La solution d'imprégnation utilisée à l'étape c) du procédé selon l'invention peut être complétée par tout solvant polaire connu de l'homme du métier. Ledit solvant polaire utilisé est avantageusement choisi dans le groupe formé par le méthanol, l'éthanol, l'eau, le phénol, le cyclohexanol, pris seuls ou en mélange. Ledit solvant polaire utilisé dans l'étape c) du procédé selon l'invention peut également être avantageusement choisi dans le groupe formé par le carbonate de propylène, le DMSO (diméthylsulfoxyde) ou le sulfolane, pris seul ou en mélange. De manière préférée, on utilise un solvant protique polaire. Une liste des solvants polaires usuels ainsi que leur constante diélectrique peut être trouvée dans le livre "Solvents and Solvent Effects in Organic Chemistry, C. Reichardt, Wiley-VCH, 3eme édition, 2003, pages 472-474). De manière très préférée, le solvant éventuellement utilisé est l'éthanol.

De préférence, il n'y a pas de solvant dans la solution d'imprégnation utilisée à l'étape c) du procédé selon l'invention, ce qui facilite la mise en oeuvre à l'échelle industrielle. De préférence, elle contient uniquement du succinate de dialkyle et de l'acide acétique.

Le succinate de dialkyle utilisé est de préférence compris dans le groupe composé du succinate de diméthyle, du succinate de diéthyle, du succinate de dipropyle , du succinate de diisopropyle et du succinate de dibutyle. De manière préférée, le succinate de dialkyle C1-C4 utilisé est le succinate de diméthyle ou le succinate de diéthyle. Au moins un succinate de dialkyle C1-C4 est utilisé. De manière très préférée, le succinate de dialkyle C1-C4 utilisé est le succinate de diméthyle, de préférence seul.

Conformément à l'étape d) du procédé de préparation selon l'invention, le précurseur catalytique séché imprégné issu de l'étape c) est soumis à une étape de maturation. Elle est avantageusement réalisée à pression atmosphérique et à une température comprise entre 17°C et 50°C et généralement une durée de maturation comprise entre dix minutes et quarante huit heures et de préférence comprise entre trente minutes et cinq heures, est suffisante. Des durées plus longues ne sont pas exclues. Un moyen simple d'ajuster la durée de maturation est de caractériser la formation des hétéropolyanions de Keggin par spectroscopie Raman dans le précurseur catalytique séché imprégné issu de l'étape c) du procédé selon l'invention. De manière très préférée, pour augmenter la productivité sans modifier la quantité d'hétéropolyanions reformés, la durée de la maturation est comprise entre trente minutes et quatre heures. De manière encore plus préférée, la durée de la maturation est comprise entre trente minutes et trois heures.

Conformément à l'étape e) du procédé de préparation selon l'invention, le précurseur catalytique séché imprégné maturé issu de l'étape d) est soumis à une étape de séchage à une température inférieure à 180°C, sans étape de calcination ultérieure à par exemple une température supérieure à 200°C.

Le but de cette étape est d'obtenir un catalyseur transportable, stockable, et manipulable, en particulier pour le chargement de l'unité d'hydrotraitement. Il s'agit avantageusement, selon le mode de réalisation de l'invention choisi, d'enlever tout ou partie de l'éventuel solvant ayant permis l'introduction de la combinaison du succinate de dialkyle C1-C4 (en particulier de diméthyle) et de l'acide acétique. Dans tous les cas, et en particulier dans le cas où la combinaison succinate de dialkyle C1-C4 (en particulier de diméthyle) et acide acétique est utilisée seule, il s'agit de donner un aspect sec au catalyseur, afin d'éviter que les extrudés ne se collent les uns aux autres durant les étapes de transport, de stockage, de manipulation ou de chargement.

L'étape e) de séchage du procédé selon l'invention est avantageusement effectuée par toute technique connue de l'homme du métier. Elle est avantageusement effectuée à pression atmosphérique ou à pression réduite. De manière préférée cette étape est réalisée à pression atmosphérique.

Cette étape e) est avantageusement effectuée à une température supérieure à 50°C et inférieure à 180°C, de préférence comprise entre 60 et 170 °C et de manière très préférée, comprise entre 80 et 160 °C.

Elle est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée le séchage est réalisé en lit traversé en présence d'azote.

De préférence, cette étape a une durée comprise entre 15 minutes et 4 heures et de préférence entre 30 minutes et 3 heures et de manière très préférée entre 1 heure et 3 heures.

A l'issue de l'étape e) du procédé selon l'invention, on obtient un catalyseur séché, qui n'est soumis à aucune étape de calcination ultérieure sous air par exemple à une température supérieure à 200°C.

Le catalyseur obtenu à l'issue de l'étape d) ou de l'étape e) présente un spectre Raman comprenant les bandes les plus intenses à 990, 974 cm⁻¹ (hétéropolyanions de type Keggin), les bandes correspondant au succinate (pour le succinate de diméthyle la bande la plus intense est à 853 cm⁻¹), et les bandes caractéristiques de l'acide acétique, dont la plus intense à 896 cm⁻¹.

Avant son utilisation, il est avantageux de transformer un catalyseur séché ou calciné en un catalyseur sulfuré afin de former son espèce active. Cette phase d'activation ou de sulfuration s'effectue par les méthodes bien connues de l'homme de l'art, et avantageusement sous une atmosphère sulfo-réductrice en présence d'hydrogène et d'hydrogène sulfuré.

A l'issue de l'étape e) du procédé selon l'invention, ledit catalyseur séché obtenu est donc avantageusement soumis à une étape f) de sulfuration, sans étape de calcination intermédiaire.

Ledit catalyseur séché est avantageusement sulfuré de manière *ex situ* ou *in situ.* Les agents sulfurants sont le gaz H₂S ou tout autre composé contenant du soufre utilisé pour l'activation des charges hydrocarbures en vue de sulfurer le catalyseur. Lesdits composés contenant du soufre sont avantageusement choisis parmi les alkyldisulfures tels que par exemple le disulfure de diméthyle (DMDS), les alkylsulfures, tel que par exemple le sulfure de diméthyle, le n-butylmercaptan, les composés polysulfures de type tertiononylpolysulfure tels que par exemple le TPS-37 ou le TPS-54 commercialisés par la société ARKEMA, ou tout autre composé connus de l'homme du métier permettant d'obtenir une bonne sulfuration du catalyseur. De manière préféré le catalyseur est sulfuré *in situ* en présence d'un agent sulfurant et d'une charge hydrocarbonée. De manière très préférée le catalyseur est sulfuré *in situ* en présence d'une charge hydrocarbonée additivée de disulfure de diméthyle.

### PROCÉDÉ D'HYDROCONVERSION

L'invention porte sur un procédé d'hydroconversion de charges hydrocarbonées en présence du catalyseur de l'invention.

Le procédé d'hydroconversion (hydrocraquage) opère en présence d'hydrogène, généralement à une température supérieure à 200°C, sous une pression supérieure à 1 MPa, la vitesse spatiale étant comprise entre 0,1 et 20 h-1 et la quantité d'hydrogène introduite est telle que le rapport volumique litre d'hydrogène/litre d'hydrocarbure soit compris entre 80 et 5000 L/L.

De préférence, le procédé d'hydrocraquage opère en présence d'hydrogène, à une température supérieure à 200°C, de préférence comprise entre 250 et 480°C, de manière préférée entre 320 et 450°C, de manière très préférée entre 330 et 435°C, sous une pression supérieure à 1 MPa, de préférence entre 2 et 25 MPa, de manière préférée entre 3 et 20 MPa, à la vitesse spatiale comprise entre 0,1 et 20 h-1, de préférence 0,1 et 6 h-1, de manière préférée entre 0,2 et 3 h-1, et la quantité d'hydrogène introduite est telle que le rapport volumique litre d'hydrogène/litre d'hydrocarbure est compris entre 80 et 5000 L/L et le plus souvent entre 100 et 3000 L/L.

Ces conditions opératoires utilisées dans ces procédés permettent généralement d'atteindre des conversions par passe, en produits ayant des points d'ébullition inférieurs à 300°C, et mieux inférieurs à 340°C, et encore mieux inférieurs à 370°C, d'au moins 50% pds et de manière encore plus préférée comprises entre 20 et 100% mais le plus généralement entre 60-95%pds.

### Charges

Des charges très variées peuvent être traitées par les procédés selon l'invention décrits ci-dessus. Elles contiennent avantageusement au moins 20% volume et de préférence au moins 80% volume de composés bouillant au-dessus de 340°C.

La charge est avantageusement choisie parmi les LCO (Light Cycle Oil = gazoles légers issus d'une unité de craquage catalytique), les distillats atmosphériques, les distillats sous vide tels que par exemple issus de la distillation directe du brut ou d'unités de conversion telles que le FCC, le coker ou la viscoréduction, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe, en lit bouillonnant ou en slurry de RAT (résidus atmosphériques) et/ou de RSV (résidus sous vide) et/ou d'huiles désasphaltées, et les huiles désasphaltées, prises seules ou en mélange. La liste ci-dessus n'est pas limitative. Les paraffines issues du procédé Fischer-Tropsch sont exclues. Lesdites charges ont de préférence un point d'ébullition T5 supérieur à 340°C, de préférence supérieur à 370°C, c'est à dire que 95% des composés présents dans la charge ont un point d'ébullition supérieur à 340°C, et de manière préférée supérieur à 370°C.

La teneur en azote des charges traitées dans les procédés selon l'invention est avantageusement supérieure à 500 ppm poids, de préférence comprise entre 500 et 10000 ppm poids, de manière plus préférée entre 700 et 5000 ppm poids et de manière encore plus préférée entre 1000 et 4000 ppm poids. La teneur en soufre des charges traitées dans les procédés selon l'invention est avantageusement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés selon l'invention est de préférence inférieure à 10 ppm poids, de manière préférée inférieure à 5 ppm poids et de manière encore plus préférée 1 ppm poids.

La charge peut éventuellement contenir des asphaltènes. La teneur en asphaltènes est généralement inférieure à 3000 ppm poids, de manière préférée inférieure à 1000 ppm poids, de manière encore plus préférée inférieure à 200 ppm poids.

### Lits de garde

Dans le cas où la charge contient des composés de type résines et/ou asphaltènes et /ou métaux, il est avantageux de faire passer au préalable la charge sur un lit de catalyseur ou d'adsorbant différent du catalyseur d'hydrocraquage ou d'hydrotraitement. Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre mode de réalisation préféré, avoir des formes géométriques plus particulières afin d'augmenter leur fraction de vide. La fraction de vide de ces catalyseurs est comprise entre 0,2 et 0,75. Leur diamètre extérieur peut varier entre 1 et 35 mm. Parmi les formes particulières possibles sans que cette liste soit limitative, nous citons : les cylindres creux, les anneaux creux, les anneaux de Raschig, les cylindres creux dentelés, les cylindres creux crénelés, les roues de charrettes pentaring, les cylindres à multiples trous, etc..

Ces catalyseurs ou lits de garde peuvent avoir été imprégnés par une phase active ou non. De manière préférée, les catalyseurs sont imprégnés par une phase hydro-déshydrogénante. De manière très préférée, les phases CoMo, NiMo ou NiCoMo sont utilisées.

Ces catalyseurs ou lits de garde peuvent présenter de la macroporosité. Les lits de garde peuvent être commercialisés par Norton-Saint-Gobain, par exemple les lits de garde MacroTrap®. Les lits de garde peuvent être commercialisés par Axens dans la famille ACT : ACT077, ACT645, ACT961 ou HMC841, HMC845, HMC868, HF858, HM848 ou HMC945. Il peut être particulièrement avantageux de superposer ces catalyseurs dans au moins deux lits différents de hauteurs variables. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs. Enfin, il peut être aussi fait l'utilisation de lits de garde permutables pour pouvoir traiter les charges contenant le plus d'asphaltènes et de métaux.

### Modes de réalisation

Les procédés d'hydrocraquage selon l'invention peuvent avantageusement mettre en oeuvre ledit catalyseur décrit ci dessus seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydrotraitement classique situé en amont du catalyseur utilisé dans le procédé selon la présente invention.

Les procédés d'hydrocraquage selon l'invention peuvent avantageusement également mettre en oeuvre ledit catalyseur décrit ci dessus seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydrotraitement classique situé dans un réacteur en lit fixe ou en lit bouillonnant en amont du catalyseur utilisé dans le procédé selon la présente invention.

### Procédé dit en une étape

Le procédé d'hydrocraquage selon l'invention peut avantageusement être mis en oeuvre dans un procédé dit en une étape.

L'hydrocraquage dit en une étape, comporte en premier lieu et de façon générale un hydroraffinage poussé qui a pour but de réaliser une hydrodésazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif décrit ci-dessus. Cependant, il est à noter qu'aucune séparation n'intervient entre les deux types de catalyseurs. La totalité de l'effluent en sortie de réacteur est injectée sur ledit catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

Le catalyseur décrit selon l'invention est donc avantageusement mis en oeuvre dans un procédé d'hydrocraquage dit en une étape, dans une zone d'hydrocraquage placée en aval d'une zone d'hydroraffinage, aucune séparation intermédiaire n'étant mise en oeuvre entre les deux zones.

De préférence, le catalyseur d'hydroraffinage utilisé dans la première zone réactionnelle d'hydroraffinage, seul ou en association avec un autre catalyseur d'hydroraffinage classique, situé en amont du catalyseur décrit selon l'invention, est un catalyseur comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine.

### Procédé dit en une étape en lit fixe avec séparation intermédiaire

Le procédé d'hydrocraquage selon l'invention peut avantageusement être mis en oeuvre dans un procédé dit en une étape en lit fixe avec séparation intermédiaire.

Ledit procédé comporte avantageusement une zone d'hydroraffinage, une zone permettant l'élimination partielle de l'ammoniaque, par exemple par un flash chaud, et une zone comportant ledit catalyseur d'hydrocraquage selon l'invention. Ce procédé d'hydrocraquage de charges hydrocarbonées en une étape pour la production de distillats moyens et éventuellement de bases huiles comporte avantageusement au moins une première zone réactionnelle d'hydroraffinage, et au moins une deuxième zone réactionnelle, dans laquelle est opéré l'hydrocraquage d'au moins une partie de l'effluent de la première zone réactionnelle. Ce procédé comporte également avantageusement une séparation incomplète de l'ammoniaque de l'effluent sortant de la première zone. Cette séparation est avantageusement effectuée au moyen d'un flash chaud intermédiaire. L'hydrocraquage opéré en deuxième zone réactionnelle est avantageusement réalisé en présence d'ammoniaque en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote.

Le catalyseur décrit selon l'invention est donc avantageusement mis en oeuvre dans un procédé d'hydrocraquage dit en une étape en lit fixe avec séparation intermédiaire, dans une zone d'hydrocraquage placée en aval d'une zone d'hydroraffinage, une séparation intermédiaired'élimination partielle de l'ammoniaque étant mise en oeuvre entre les deux zones.

De préférence, le catalyseur d'hydroraffinage utilisé dans la première zone réactionnelle d'hydroraffinage, seul ou en association avec un autre catalyseur d'hydroraffinage classique, situé en amont du catalyseur décrit selon l'invention, est un catalyseur comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice.

### Procédé dit en deux étapes

Le procédé d'hydrocraquage selon l'invention peut avantageusement être mis en oeuvre dans un procédé dit en deux étapes dont le but est la conversion maximale, voire totale.

L'hydrocraquage en deux étapes, comporte une première étape qui a pour objectif, comme dans le procédé "une étape", de réaliser l'hydroraffinage de la charge, mais aussi d'atteindre une conversion dans la première étape de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillats moyens (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en NH3 ainsi qu'en composés azotés organiques, en général moins de 20 ppm poids voire moins de 10 ppm poids.

Les configurations de lits catalytiques décrites dans le cas d'un procédé dit en une étape peuvent avantageusement être utilisées dans la première étape d'un schéma dit en deux étapes, que le catalyseur selon l'invention soit utilisé seul ou en association avec un catalyseur d'hydroraffinage classique.

Le catalyseur décrit selon l'invention est donc avantageusement mis en oeuvre dans un procédé d'hydrocraquage dit en deux étapes, dans la deuxième étape d'hydrocraquage placée en aval de la première étape d'hydroraffinage, une séparation intermédiaire étant mise en oeuvre entre les deux zones.

Pour les procédés dits en une étape et pour la première étape d'hydroraffinage des procédés d'hydrocraquage dits en deux étapes, les catalyseurs d'hydroraffinage classique pouvant avantageusement être utilisés sont les catalyseurs comprenant éventuellement un élément dopant choisi parmi le phosphore, le bore et le silicium, ledit catalyseur étant à base d'éléments du groupe VIII non nobles et éventuellement en combinaison avec des éléments du groupe VIB sur support alumine ou silice alumine.

Les exemples qui suivent démontrent les gains d'activité et de sélectivité en distillats moyens importants sur les catalyseurs préparés selon le procédé selon l'invention par rapport aux catalyseurs de l'art antérieur et précisent l'invention sans toutefois en limiter la portée.

### EXEMPLES

### Exemple 1 : Préparation des catalyseurs 1A (non conforme à l'invention) et 1B (conforme à l'invention)

La zéolithe USY-1 (ultra-stable Y) dont les caractéristiques sont décrites dans le Tableau 1 a été utilisée dans la préparation des catalyseurs 1A et 1B.

**Tableau 1 : Caractéristique de la zéolithe USY-1.**

| Nature de la zéolithe | Nom donné à la zéolithe | Ratio SiO₂/Al₂O₃ | Forme cationique | Paramètre de maille (Å) | Surface (m²/g) |
|---|---|---|---|---|---|
| USY | USY-1 | 30 | H⁺ | 24,28 | 780 |

Une matrice composée de boehmite tabulaire ultrafine ou gel d'alumine, commercialisée sous le nom SB3 par la société Condéa Chemie Gmbh a été utilisée. Le support est obtenu après mise en forme et extrusion en mélangeant 20 % poids de la zéolithe USY-1 avec 80% de gel d'alumine. Le support est ensuite calcinés à 500°C durant 2 heures sous air.

Une solution composée d'oxyde de molybdène, d'hydroxycarbonate de nickel et d'acide phosphorique est ajoutée sur le support par imprégnation à sec afin d'obtenir une formulation de 3,1/18,0/3,1 exprimée en % poids d'oxydes par rapport à la quantité de matière sèche du catalyseur final. Après imprégnation à sec, les extrudés sont laissés à maturer en atmosphère saturée en eau pendant 12 h, puis ils sont séchés une nuit à 90°C. Ce précurseur catalytique est appelé 1PC. Le précurseur catalytique 1PC est finalement calciné à 450°C pendant 2 heures conduit au catalyseur calciné 1A (non-conforme à l'invention).

Le catalyseur 1B, conforme à l'invention, est préparé par imprégnation à sec du précurseur catalytique 1PC avec une solution comprenant du succinate de diméthyle et de l'acide acétique dilués dans l'eau. Les teneurs visées en succinate de diméthyle (DMSU) et en Acide acétique (AA) sont respectivement de 27 % poids et 18 % poids (soit AA/Mo=2,7 mol/mol et DMSU/Mo=1,5 mol/mol). Après une durée de maturation de 3 heures en vase clos à température ambiante, le catalyseur est une nouvelle fois séché sous flux d'azote (1 NL/g/g) durant 1 heure en lit traversé à 140°C.

Le spectre Raman du catalyseur 1B, conforme à l'invention, est donné sur la . Les bandes les plus intenses caractéristiques du succinate de diméthyle à 391, 853, 924 et 964 cm⁻¹ sont clairement identifiables. De la même manière, la bande la plus intense caractéristique de l'acide acétique à 896 cm⁻¹ est clairement visible. Enfin, les bandes les plus intenses caractéristiques des hétéropolyanions de type Keggin à 251, 603 et 990 cm⁻¹ sont aussi clairement identifiables.

### Exemple 2 : Préparation des catalyseurs 2A (non conforme à l'invention) et 2B (conforme à l'invention)

La zéolithe USY-2 (ultra-stable Y) dont les caractéristiques sont décrites dans le Tableau 2 a été utilisée pour la préparation des catalyseurs 2A (non conforme à l'invention) et 2B (conforme à l'invention).

**Tableau 2 : Caractéristique de la zéolithe USY-2.**

| Nature de la zéolithe | Nom donné à la zéolithe | Ratio SiO₂/Al₂O₃ | Forme cationique | Paramètre de maille (Å) | Surface (m²/g) |
|---|---|---|---|---|---|
| USY | USY-2 | 12 | H⁺ | 24,35 | 740 |

Une matrice composée de boehmite tabulaire ultrafine ou gel d'alumine, commercialisée sous le nom SB3 par la société Condéa Chemie Gmbh a été utilisée. Le support est obtenu après mise en forme et extrusion en mélangeant 20 % poids de la zéolithe USY-1 avec 80% de gel d'alumine. Le support est ensuite calcinés à 500°C durant 2 heures sous air.

Une solution composée d'oxyde de molybdène, d'hydroxycarbonate de nickel et d'acide phosphorique est ajoutée sur le support par imprégnation à sec afin d'obtenir une formulation de 3,1/18,0/3,1 exprimée en % poids d'oxydes par rapport à la quantité de matière sèche du catalyseur final. Après imprégnation à sec, les extrudés sont laissés à maturer en atmosphère saturée en eau pendant 12 h, puis ils sont séchés une nuit à 90°C. Ce précurseur catalytique est appelé 2PC. Le précurseur catalytique 2PC est finalement calciné à 450°C pendant 2 heures conduit au catalyseur calciné 2A (non-conforme à l'invention).

Le catalyseur 2B, conforme à l'invention, est préparé par imprégnation à sec du précurseur catalytique 2PC avec une solution comprenant du succinate de diméthyle et de l'acide acétique dilués dans l'eau. Les teneurs visées en succinate de diméthyle (DMSU) et en Acide acétique (AA) sont respectivement de 27 % poids et 18 % poids (soit AA/Mo=2,7 mol/mol et DMSU/Mo=1,5 mol/mol). Après une durée de maturation de 3 heures en vase clos à température ambiante, le catalyseur est une nouvelle fois séché sous flux d'azote (1 NL/g/g) durant 1 heure en lit traversé à 140°C.

Le spectre Raman du catalyseur 2B, conforme à l'invention, comporte, comme dans le cas du spectre Raman du catalyseur 1B les bandes les plus intenses caractéristiques du succinate de diméthyle à 391, 853, 924 et 964 cm⁻¹ , la bande la plus intense caractéristique de l'acide acétique à 896 cm⁻¹ et enfin, les bandes les plus intenses caractéristiques des hétéropolyanions de type Keggin à 251, 603 et 990 cm⁻¹.

### Exemple 3 : Préparation des catalyseurs 3A (non conforme à l'invention) et 3B (conforme à l'invention)

La zéolithe USY-2 (ultra-stable Y) dont les caractéristiques sont décrites dans le Tableau 2 et la zéolithe BETA dont les caractéristiques sont décrites dans le tableau 3 ont été utilisées pour préparer les catalyseurs 3A (non conforme à l'invention) et 3B (conforme à l'invention).

**Tableau 3 : Caractéristique de la zéolithe BETA.**

| Nature de la zéolithe | Nom donné à la zéolithe | Ratio SiO₂/Al₂O₃ | Forme cationique | Paramètre de maille (Å) | Surface (m²/g) |
|---|---|---|---|---|---|
| Béta | BETA | 25 | H⁺ | 26,2 | 680 |

Le catalyseur 3 a été préparé suivant la même procédure que celle utilisée dans les exemples 1 et 2 à l'exception du mélange de gel d'alumine et de zéolithe qui est composé de 80 % poids de gel d'alumine avec 17 % poids de zéolithe USY-2 et 3 % poids de zéolithe BETA. La solution d'imprégnation utilisée est équivalente avec une teneur finale en NiMoP visée de respectivement 3,1/18/3,1. Comme dans les exemples 1 et 2, le précurseur catalytique 3PC est obtenu après maturation et séchage et le catalyseur calciné 3A (non conforme) après calcination.

Le catalyseur 3B, conforme à l'invention, est préparé par imprégnation à sec du précurseur catalytique 3PC avec une solution comprenant succinate de diméthyle et de l'acide acétique dilués dans l'eau. Les teneurs visées en succinate de diméthyle (DMSU) et en Acide acétique (AA) sont respectivement de 27 % poids et 18 % poids (soit AA/Mo=2,7 mol/mol et DMSU/Mo=1,5 mol/mol). Après une durée de maturation de 3 heures en vase clos à température ambiante, le catalyseur est une nouvelle fois séché sous flux d'azote (1 NL/g/g) durant 1 heure en lit traversé à 140°C.

Le spectre Raman du catalyseur 3B, conforme à l'invention, comporte, comme dans le cas du spectre Raman des catalyseurs 1B et 2B, les bandes les plus intenses caractéristiques du succinate de diméthyle à 391, 853, 924 et 964 cm⁻¹ , la bande la plus intense caractéristique de l'acide acétique à 896 cm⁻¹ et enfin, les bandes les plus intenses caractéristiques des hétéropolyanions de type Keggin à 251, 603 et 990 cm⁻¹.

### Exemple 4 : Evaluation des catalyseurs en hydrocraquage dit une étape d'un distillat sous vide.

Les catalyseurs dont les préparations sont décrites dans les exemples précédents sont utilisés dans les conditions de l'hydrocraquage à conversion élevée (60-100%). La charge pétrolière est un distillat sous vide ayant subi une première étape d'hydroraffinage sur un catalyseur dont les principales caractéristiques sont données dans le Tableau 4.

Aucune étape de séparation intermédiaire n'est mise en ouvre entre l'étape préalable d'hydroraffinage et l'étape d'hydrocraquage.

**Tableau 4 : Caractéristique de la charge utilisée.**

| | |
|---|---|
| Densité (20/4) | 0,869 |
| Soufre (ppm poids) | 502 |
| Azote (ppm poids) | 10 |

| Distillation simulée | |
|---|---|
| point initial | 298°C |
| point 10 % | 369°C |
| point 50 % | 427°C |
| point 90 % | 481°C |
| point final | 538°C |

On ajoute à la charge 0,6% poids d'aniline et 2% poids de diméthyl-disulfure afin de simuler les pressions partielles de H₂S et de NH₃ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320°C. Notons que toute méthode de sulfuration in-situ ou ex-situ est convenable. Une fois la sulfuration réalisée, la charge décrite dans le Tableau 4 peut être transformée. Les conditions opératoires de l'unité de test sont données dans le Tableau 5.

**Tableau 5 : Conditions de test des catalyseurs.**

| | |
|---|---|
| | |
| Pression totale | 9 Mpa |
| Catalyseur | 80 cm³ |
| Débit d'hydrogène | 80 L/h |
| Débit de charge | 80 cm³/h |

Les performances catalytiques sont exprimées par la température qui permet d'atteindre un niveau de conversion brute de 70% et par les rendements en distillats moyens (DM). Ces performances catalytiques sont mesurées sur le catalyseur après qu'une période de stabilisation, généralement au moins 48 heures, ait été respectée.

La conversion brute CB est prise égale à :CB = % pds de 380°C moins de l'effluent, avec "380°C moins" représentant la fraction, distillée à une température inférieure ou égale à 380°C.

Le rendement en distillats moyens (150-380°C) est égal au % poids de composés ayant un point d'ébullition compris entre 150 et 380°C dans les effluents.

La température de réaction est fixée de façon à atteindre une conversion brute CB égale à 70% poids.

**.Tableau 6 : Activités catalytiques des catalyseurs en hydrocraquage.**

| Catalyseur | T(°C) | Rdt Naphta (% pds) | Rdt kérosène (% pds) | Rdt Gazole (% pds) | Rdt Distillats Moyens (% pds) |
|---|---|---|---|---|---|
| 1A | 378 | 17 | 24,6 | 21,3 | 45,9 |
| 1B | 376 | 15,5 | 25,4 | 22,5 | 47,9 |
| 2A | 370 | 17,1 | 25,0 | 21,1 | 46,1 |
| 2B | 368 | 15,8 | 25,2 | 22,5 | 47,7 |
| 3A | 366 | 17,8 | 25,1 | 20,3 | 45,4 |
| 3B | 364 | 16,2 | 25,3 | 21,5 | 46,8 |

Les catalyseurs conformes à l'invention (1B, 2B et 3B) montrent clairement des performances catalytiques supérieures aux catalyseurs non-conformes (1A, 2A et 3A).

Le catalyseur 1B montre un gain de 2,0% poids en distillats moyens en comparaison du catalyseur 1A et un gain en activité de 2°C. Le catalyseur 2B est quant à lui plus sélectif de 1,6 % poids et plus actif de 2°C que le catalyseur 2A. Le catalyseur 3B présente un rendement en distillats moyens amélioré de 1,4 % poids avec un gain de 2°C en température de réaction en comparaison du catalyseur non-conforme 3A.

La quantité de naphta produite est nettement réduite par l'utilisation du catalyseur selon l'invention. Grâce à la mise en oeuvre de l'invention, il est obtenu un gain en sélectivité en distillats moyens sans perte d'activité .

Ces augmentations de sélectivité sont très importantes au niveau des marges du raffineur: un gain de 2°C représente 1 à 3 mois de cycle industriel supplémentaire (d'où un gain de productivité) et un gain de 2 points de sélectivité représente une production augmentée de 1-3% en distillats moyens (gain en quantité de produits à haute valeur ajoutée)..

## Revendications

1. Catalyseur contenant un support comprenant au moins un liant et au moins une zéolite ayant au moins une série de canaux dont l'ouverture est définie par un anneau contenant 12 atomes d'oxygène, ledit catalyseur comprenant du phosphore, au moins un succinate de dialkyle C1-C4, de l'acide acétique et une fonction hydro-déshydrogénante comprenant au moins un élément du groupe VIB et au moins un élément du groupe VIII, catalyseur dont le spectre Raman comprend les bandes à 990 et/ou 974 cm⁻¹ caractéristiques d'au moins un hétéropolyanion de Keggin, les bandes caractéristiques dudit succinate et la bande principale à 896 cm⁻¹ caractéristique de l'acide acétique.

2. Catalyseur selon la revendication 1 dans lequel le succinate de dialkyle est le succinate de diméthyle et dans lequel le catalyseur possède dans son spectre les bandes Raman principales à 990 et/ou 974 cm⁻¹ caractéristiques des hétéropolyanions de Keggin, et 853 cm⁻¹ caractéristique du succinate de diméthyle et 896 cm⁻¹ caractéristique de l'acide acétique.

3. Catalyseur selon la revendication 1 dans lequel le succinate de dialkyle est le succinate de diéthyle, le succinate de dibutyle ou le succinate de diisopropyle.

4. Catalyseur selon l'une des revendications précédentes comprenant un support constitué d'alumine et de zéolite.

5. Catalyseur selon l'une des revendications précédentes comprenant un support constitué de silice-alumine et de zéolite.

6. Catalyseur selon l'une des revendications précédentes comprenant également du bore et/ou du fluor.

7. Catalyseur selon l'une des revendications précédentes dans lequel la zéolite est choisie dans le groupe formé par les zéolites de type FAU, BEA, ISV, IWR, IWW, MEI, UWY.

8. Catalyseur selon la revendication 7 dans lequel la zéolite est choisie parmi la zéolite Y et/ou la zéolite bêta.

9. Catalyseur selon l'une des revendications précédentes et sulfuré.

10. Procédé de préparation d'un catalyseur selon l'une des revendications précédentes, ledit procédé comprenant les étapes successives suivantes :
a) au moins une étape d'imprégnation d'un support, comprenant au moins un liant et au moins une zéolite ayant au moins une série de canaux dont l'ouverture est définie par un anneau contenant 12 atomes d'oxygène, par au moins une solution contenant les éléments de la fonction hydro-déshydrogénante, et du phosphore
b) séchage à une température inférieure à 180°C sans calcination ultérieure
c) au moins une étape d'imprégnation par une solution d'imprégnation comprenant au moins un succinate de dialkyle C1-C4, l'acide acétique et au moins un composé de phosphore, si celui-ci n'a pas été introduit en totalité à l'étape a)
d) une étape de maturation,
e) une étape de séchage à une température inférieure à 180°C, sans étape de calcination ultérieure.

11. Procédé selon la revendication 10 dans lequel la totalité de la fonction hydro-déshydrogénante est introduite lors de l'étape a).

12. Procédé selon l'une des revendications 10 à 11 dans lequel le succinate de dialkyle et l'acide acétique sont introduits dans la solution d'imprégnation de l'étape c) dans une quantité correspondant à un rapport molaire de succinate de dialkyle par élément(s) du groupe VIB imprégné du précurseur catalytique compris entre 0,15 et 2,5 mole/mole, et à un rapport molaire d'acide acétique par élément(s) du groupe VIB imprégné du précurseur catalytique compris entre 0,1 et 10 mole/mole.

13. Procédé selon l'une des revendications 10 à 12, ledit procédé comprenant les étapes successives suivantes :
a) au moins une étape d'imprégnation à sec dudit support par une solution contenant la totalité des éléments de la fonction hydro-déshydrogénante, et le phosphore,
b) séchage à une température comprise entre 75 et 130°C sans calcination ultérieure,
c) au moins une étape d'imprégnation à sec par une solution d'imprégnation comprenant le succinate de diméthyle et l'acide acétique,
d) une étape de maturation à 17-50°C,
e) une étape de séchage à une température comprise entre 80 et 160°C, sans étape de calcination ultérieure.

14. Procédé selon l'une des revendications 10 à 13 dans lequel la quantité de phosphore introduite dans le catalyseur, exprimée en quantité d'oxyde , est comprise entre 0,1 à 20 %, de préférence entre 0,1 et 15 % et de manière encore plus préférée entre 0,1 et 10 % poids.

15. Procédé selon l'une des revendications 10 à 14 dans lequel le produit obtenu à l'issue de l'étape e) subit une étape de sulfuration.

16. Procédé d'hydroconversion de charges hydrocarbonées en présence d'un catalyseur selon l'une des revendications 1 à 9 ou préparé par le procédé selon l'une des revendications 10 à 15.

## Patentansprüche

1. Katalysator, enthaltend einen Träger, umfassend mindestens ein Bindemittel und mindestens einen Zeolith mit mindestens einer Serie von Kanälen, deren Öffnung durch einen Ring mit 12 Sauerstoffatomen definiert wird, wobei der Katalysator Phosphor, mindestens ein C1-C4-Dialkylsuccinat, Essigsäure und eine hydrierende-dehydrierende Funktion umfasst, umfassend mindestens ein Element der Gruppe VIB und mindestens ein Element der Gruppe VIII, wobei das Raman-Spektrum des Katalysators Bänder bei 990 und/oder 974 cm⁻¹ umfasst, die für mindestens ein Keggin-Heteropolyanion charakteristisch sind, wobei die Bänder für das Succinat charakteristisch sind, und das Hauptband bei 896 cm⁻¹ für Essigsäure charakteristisch ist.

2. Katalysator nach Anspruch 1, wobei das Dialkylsuccinat Dimethylsuccinat ist, und wobei der Katalysator in seinem Spektrum Raman-Hauptbänder bei 990 und/oder 974 cm⁻¹, charakteristisch für Keggin-Heteropolyanione, und 853 cm⁻¹, charakteristisch für Dimethylsuccinat, und 896 cm⁻¹, charakteristisch für Essigsäure, umfasst.

3. Katalysator nach Anspruch 1, wobei das Dialkylsuccinat Diethylsuccinat, Dibutylsuccinat oder Diisopropylsuccinat ist.

4. Katalysator nach einem der vorhergehenden Ansprüche, umfassend einen Träger, bestehend aus Aluminiumoxid und Zeolith.

5. Katalysator nach einem der vorhergehenden Ansprüche, umfassend einen Träger, bestehend aus Siliciumdioxid-Aluminiumoxid und Zeolith.

6. Katalysator nach einem der vorhergehenden Ansprüche, ebenfalls umfassend Bor und/oder Fluor.

7. Katalysator nach einem der vorhergehenden Ansprüche, wobei der Zeolith ausgewählt ist aus der Gruppe, die von Zeolithen des Typs FAU, BEA, ISV, IWR, IWW, MEI, UWY gebildet wird.

8. Katalysator nach Anspruch 7, wobei der Zeolith ausgewählt ist aus Zeolith Y und/oder beta-Zeolith.

9. Katalysator nach einem der vorhergehenden Ansprüche und sulfuriert.

10. Verfahren zur Herstellung eines Katalysators nach einem der vorhergehenden Ansprüche, wobei das Verfahren die folgenden aufeinanderfolgenden Schritte umfasst:
a) mindestens einen Schritt des Imprägnierens eines Trägers, umfassend mindestens ein Bindemittel und mindestens einen Zeolith mit mindestens einer Serie von Kanälen, deren Öffnung durch einen Ring mit 12 Sauerstoffatomen definiert wird, mit mindestens einer Lösung, enthaltend Elemente der hydrierenden-dehydrierenden Funktion, und Phosphor,
b) Trocken bei einer Temperatur von weniger als 180 °C ohne nachfolgende Calcinierung,
c) mindestens einen Schritt des Imprägnierens mit einer Imprägnierungslösung, umfassend mindestens ein C1-C4-Dialkylsuccinat, Essigsäure und mindestens eine PhosphorVerbindung, wenn diese nicht gänzlich in Schritt a) eingebracht wurde,
d) einen Reifungsschritt,
e) einen Schritt des Trocknens bei einer Temperatur von weniger als 180 °C ohne nachfolgenden Calcinierungsschritt.

11. Verfahren nach Anspruch 10, wobei die Gesamtheit der hydrierenden-dehydrierenden Funktion in Schritt a) eingebracht wird.

12. Verfahren nach einem der Ansprüche 10 bis 11, wobei das Dialkylsuccinat und die Essigsäure in die Imprägnierungslösung in Schritt c) in einer Menge eingebracht werden, die einem Molverhältnis von Dialkylsuccinat pro Element(e) der Gruppe VIB, imprägniert mit dem katalytischen Vorläufer, zwischen 0,15 und 2,5 Mol/Mol, und einem Molverhältnis von Essigsäure pro Element(e) der Gruppe VIB, imprägniert mit dem katalytischen Vorläufer, zwischen 0,1 und 10 Mol/Mol entspricht.

13. Verfahren nach einem der Ansprüche 10 bis 12, wobei das Verfahren die folgenden aufeinanderfolgenden Schritte umfasst:
a) mindestens einen Schritt des trockenen Imprägnierens des Trägers mit einer Lösung, enthaltend die Gesamtheit der Elemente der hydrierenden-dehydrierenden Funktion, und Phosphor,
b) Trocknen bei einer Temperatur zwischen 75 und 130 °C ohne nachfolgende Calcinierung,
c) mindestens einen Schritt des trockenen Imprägnierens mit einer Imprägnierungslösung, umfassend Dimethylsuccinat und Essigsäure,
d) einen Reifungsschritt bei 17-50 °C,
e) einen Schritt des Trocknens bei einer Temperatur zwischen 80 und 160 °C ohne nachfolgenden Calcinierungsschritt.

14. Verfahren nach einem der Ansprüche 10 bis 13, wobei die Menge an Phosphor, die in den Katalysator eingebracht wird, ausgedrückt als Menge an Oxid, zwischen 0,1 bis 20 Gew.-%, vorzugsweise zwischen 0,1 und 15 Gew.-% und noch bevorzugter zwischen 0,1 und 10 Gew.-% beträgt.

15. Verfahren nach einem der Ansprüche 10 bis 14, wobei das Produkt, das am Ende von Schritt e) erhalten wird, einem Sulfurierungsschritt unterzogen wird.

16. Verfahren zur Hydroumwandlung von Kohlenwasserstoffchargen in Anwesenheit eines Katalysators nach einem der Ansprüche 1 bis 9, oder hergestellt durch das Verfahren nach einem der Ansprüche 10 bis 15.

## Claims

1. A catalyst containing a support comprising at least one binder and at least one zeolite having at least one series of channels the opening of which is defined by a ring containing 12 oxygen atoms, said catalyst comprising phosphorus, at least one C1-C4 dialkyl succinate, acetic acid and a hydrodehydrogenating function comprising at least one element from group VIB and at least one element from group VIII, the Raman spectrum of the catalyst comprising bands at 990 and/or 974 cm⁻¹, characteristic of at least one Keggin heteropolyanion, the characteristic bands of said succinate and the characteristic principal band of acetic acid at 896 cm⁻¹.

2. The catalyst according to claim 1, wherein the dialkyl succinate is dimethyl succinate and in which the Raman spectrum of the catalyst has principal bands at 990 and/or 974 cm⁻¹ which are characteristic of Keggin heteropolyanions, and at 853 cm⁻¹, which is characteristic of dimethyl succinate and at 896 cm⁻¹, which is characteristic of acetic acid.

3. The catalyst according to claim 1, wherein the dialkyl succinate is diethyl succinate, dibutyl succinate or diisopropyl succinate.

4. A catalyst according to one of the preceding claims, comprising a support constituted by alumina and zeolite.

5. The catalyst according to one of the preceding claims, comprising a support constituted by silica-alumina and zeolite.

6. The catalyst according to one of the preceding claims, further comprising boron and/or fluorine.

7. The catalyst according to one of the preceding claims, wherein the zeolite is selected from the group formed by zeolites of type FAU, BEA, ISV, IWR, IWW, MEI or UWY.

8. The catalyst according to claim 7, wherein the zeolite is selected from Y zeolite and/or beta zeolite.

9. The catalyst according to one of the preceding claims, which is sulphurized.

10. A process for the preparation of a catalyst according to one of the preceding claims, said process comprising the following steps in succession:
a) at least one step for impregnating a support, comprising at least one binder and at least one zeolite having at least one series of channels the opening of which is defined by a ring containing 12 oxygen atoms, using at least one solution containing the elements of the hydrodehydrogenating function and phosphorus;
b) drying at a temperature of less than 180°C without subsequent calcining;
c) at least one step for impregnation with an impregnation solution comprising at least one C1-C4 dialkyl succinate, acetic acid and at least one compound of phosphorus if it has not been introduced in its entirety in step a);
d) a maturation step;
e) a step for drying at a temperature of less than 180°C without a subsequent calcining step.

11. The process according to claim 10, wherein all of the hydrodehydrogenating function is introduced during step a).

12. The process according to one of claims 10 to 11, wherein the dialkyl succinate and the acetic acid are introduced into the impregnation solution of step c) in a quantity corresponding to a molar ratio of dialkyl succinate to the impregnated element(s) from group VIB of the catalytic precursor in the range 0.15 to 2.5 mole/mole, and to a molar ratio of acetic acid to the impregnated element(s) from group VIB of the catalytic precursor in the range 0.1 to 10 mole/mole.

13. The process according to one of claims 10 to 12, said process comprising the following steps in succession:
a) at least one step for dry impregnation of said support using a solution containing all of the elements of the hydrodehydrogenating function and phosphorus;
b) drying at a temperature in the range 75°C to 130°C without subsequent calcining;
c) at least one step for dry impregnation with an impregnation solution comprising dimethyl succinate and acetic acid;
d) a maturation step at 17-50°C;
e) a step for drying at a temperature in the range 80°C to 160°C without a subsequent calcining step.

14. The process according to one of claims 10 to 13, wherein the quantity of phosphorus introduced into the catalyst, expressed as the quantity of oxide, is in the range 0.1% to 20%, preferably in the range 0.1% to 15% and more preferably in the range 0.1% to 10% by weight.

15. The process according to one of claims 10 to 14, wherein the product obtained at the end of step e) undergoes a sulphurization step.

16. A process for the hydroconversion of hydrocarbon feeds in the presence of a catalyst according to one of claims 1 to 9 or prepared by the process according to one of claims 10 to 15.
